# EUROPÄISCHE PATENTSCHRIFT

(11) **EP 0 641 148 B1**
(45) Veröffentlichungstag und Bekanntmachung des Hinweises auf die Patenterteilung: **04.11.1998**
(21) Anmeldenummer: 94112264.0
(22) Anmeldetag: 05.08.1994
(51) Int. Cl.: H05B 41/392, H05B 41/29, H02M 3/156

(54) **Elektronisches Vorschaltgerät zum Versorgen einer Last, beispielsweise einer Lampe**
Electronic ballast for operating a load, for example a lamp
Ballast électronique pour alimenter une charge, par exemple une lampe

(30) Priorität: 25.08.1993 DE 4328608; 29.11.1993 DE 4340604
(43) Veröffentlichungstag der Anmeldung: 01.03.1995
(73) Patentinhaber: Tridonic Bauelemente GmbH, 6850 Dornbirn (AT)
(72) Erfinder: Johler, Günter, A-6900 Bregenz (AT)
(74) Vertreter: Schmidt-Evers, Jürgen, Dipl.-Ing.

(56) Entgegenhaltungen:
- EP-A- 0 268 043
- EP-A- 0 496 529
- WO-A-92/03898
- WO-A-92/22184
- DE-A- 4 219 958

## Beschreibung

Die Erfindung betrifft ein elektronisches Vorschaltgerät zum Versorgen einer Last, beispielsweise einer Lampe, insbesondere einer Gasentladungslampe, mit einer Wechselspannung, deren Frequenz höher als die Netzfrequenz ist, mit einem an das Wechselstromnetz anzuschließenden Gleichrichter, einem diesem nachgeschalteten Wechselrichter, der die höherfrequente Wechselspannung für die Last erzeugt, und einem zwischen dem Gleichrichter und dem Wechselrichter angeordneten elektronischen Oberwellenfilter, dessen Ausgangsspannung geregelt ist.

Elektronische Gasentladungslampen haben bei Betrieb mit Netzfrequenz eine unbefriedigende Lichtausbeute und neigen zum Flimmern. Aus diesem Grunde werden sie in der Regel mit elektronischen Vorschaltgeräten betrieben, die mit Netzspannung arbeiten und daraus eine höherfrequente Betriebsspannung für die Gasentladungslampen erzeugen, deren Frequenz im Bereich von 20 bis 50 kHz liegt. Die elektronischen Vorschaltgeräte enthalten einen Gleichrichter, der die Netzspannung gleichrichtet und einen Wechselrichter, der aus der gleichgerichteten Netzspannung die höherfrequente Betriebsspannung erzeugt. Durch die Verwendung von elektronischen Vorschaltgeräten kann die Lichtausbeute der Gasentladungslampen zwar beachtlich gesteigert und ein Flimmern vermieden werden; gleichzeitig tritt jedoch das Problem auf, daß infolge der Schaltvorgänge im Gleichrichter Oberwellen entstehen, die bei Rückstrahlung ins Netz unzulässige Störungen verursachen. Um dies zu vermeiden kann zwischen den Gleichrichter und das Netz ein passives Filter geschaltet werden, das jedoch eine relativ große und teure Drossel enthalten muß. Diese Drossel kann vermieden werden, wenn anstelle des passiven Filters ein elektronisches Oberwellenfilter verwendet wird, das zwischen den Gleichrichter und den Wechselrichter geschaltet wird. Das elektronische Oberwellenfilter zeichnet sich dadurch aus, daß es dem Gleichrichter pulsförmig Strom entnimmt, wobei die Hüllkurve der Stromimpulse der Sinushalbwellen-Form der Netzfrequenz angenähert ist.

Ein solches Oberwellenfilter ist beispielsweise in der EP 268 043 A1 oder in dem Buch von C. H. Sturm/E. Klein "Betriebsgeräte und Schaltungen für Lampen", Verlag SIEMENS AG, 6. Auflage, 1992, Seiten 127/128 beschrieben. Das elektronische Oberwellenfilter besteht aus einem getakteten Schaltregler, der beispielsweise ein Aufwärts-Wandler (Hochsetzsteller) oder ein invertierender Wandler sein kann. Das Prinzip eines solchen getakteten Schaltreglers ist in dem Buch von U. Tietze, Ch. Schenk "Halbleiter-Schaltungstechnik", Springer-Verlag, 9. Auflage, Seiten 563 bis 570 beschrieben.

Bei den bekannten Oberwellenfiltern wird die Ausgangsspannung des Schaltreglers ständig überwacht und mit einer festen Sollwertspannung verglichen. Der Regler erzeugt aus der Regeldifferenz ein Regelsignal variabler Schaltfrequenz für den Schalter des Schaltreglers. Durch Veränderung der Schaltfrequenz wird die Ausgangsspannung konstant gehalten.

Insbesondere bei Gasentladungslampen besteht zusätzlich das Bedürfnis, die Betriebsspannung zur Einstellung der Helligkeit zu verändern. Dies erfolgt bei Lampen normalerweise durch Einschalten eines Dimmers in die Netz-Zuleitung. Der Dimmer kann beispielsweise eine Phasenanschnittsschaltung enthalten, wie sie in dem Buch von C. H. Sturm/E. Klein auf Seite 141 und in dem Buch von Klaus Beut "Bauelemente der Elektronik, Elektronik 2", Vogel-Verlag, 1975, Seite 242 beschrieben ist. Der Dimmer erzeugt aus der Netz-Wechselspannung Impulse wechselnder Polarität mit variabler Breite. Durch anschließendes Gleichrichten kann aus diesen Impulsen eine Gleichspannung erzeugt werden, deren Höhe bei Veränderung des Dimmgrades (Phasenanschnitts) veränderbar ist. Bei Verwendung eines elektronischen Vorschaltgerätes ohne Oberwellenfilter wird auf diese Weise die dem Wechselrichter zugeführte Spannung variiert, mit der Folge, daß auch die Betriebsspannung für die Lampe und damit deren Helligkeit verändert wird.

Anders liegt der Fall dann, wenn das Vorschaltgerät ein elektronisches Oberwellenfilter enthält. Letzteres hat, wie oben ausgeführt, die Tendenz, die Ausgangsspannung konstant zu halten. Das bedeutet, daß beispielsweise ein Dimmen der Lampe bei Verwendung eines einfachen in die Netz-Zuleitung eingesetzten Dimmers nicht möglich ist.

Der Erfindung liegt die Aufgabe zugrunde, ein elektronisches Vorschaltgerät der eingangs beschriebenen Art so zu modifizieren, daß die von dem Vorschaltgerät zum Versorgen der Last erzeugte Betriebsspannung variierbar ist.

Die Aufgabe ist erfindungsgemäß dadurch gelöst, daß der Sollwert zur Regelung der Ausgangsspannung des Oberwellenfilters abhängig von Spannungsveränderungen der Ein- bzw. Ausgangsspannung eines zweiten ebenfalls an das Wechselstromnetz anzuschließenden Gleichrichters gemacht wird.

Wie an sich bekannt, werden dem Regler des elektronischen Oberwellenfilters ein erstes und ein zweites Sollwertsignal zugeführt. Das erste Sollwertsignal entspricht der ungeglätteten halbsinus-förmigen Ausgangsspannung des Gleichrichters und wird mit einem ersten Istwert-Signal verglichen, welches dem Ausgangsstrom des elektronischen Oberwellenfilters entspricht. Die Regeldifferenz wird ausgenutzt, um zu gewährleisten, daß die dem Gleichrichter entnommenen Stromimpulse eine Hüllkurve bilden, die der Halbsinus-Form der Netzfrequenz entsprechen.

Während bisher das zweite Sollwert-Signal eine konstante Referenz-Spannung war, soll es nunmehr gemäß einer zweckmäßigen Ausgestaltung der Erfindung dadurch gewonnen werden, daß die Ausgangsspannung des zweiten Gleichrichters in einem Komparator mit einer festen Schwellspannung verglichen und das Ausgangssignal des Komparators in einem Mittelwertbildner geglättet wird. Die als zweites Sollwert-Signal verwendete Ausgangsspannung des Mittelwertbildners ist abhängig von der Kurvenform der ungeglätteten Ausgangsimpulse des zweiten Gleichrichters. Die Kurvenform ist durch Verstellen eines dem zweiten Gleichrichter vorgeschalteten Dimmers veränderbar. Das zweite Sollwertsignal wird im Regler mit einem der Ausgangsspannung des elektronischen Oberwellenfilters entsprechenden zweiten Istwert-Signal verglichen. Die Regeldifferenz dient zur Variation der Schaltfrequenz des Schalters des elektronischen Oberwellenfilters derart, daß die Ausgangsspannung des elektronischen Oberwellenfilters in Abhängigkeit von dem zweiten Sollwert-Signal und damit in Abhängigkeit vom Dimmungsgrad des Dimmers veränderbar ist.

Ein Ausführungsbeispiel der Erfindung wird nachfolgend anhand der Zeichnungen beschrieben.

Es zeigen:
- Fig. 1: ein Blockschaltbild des elektronischen Vorschaltgerätes mit Dimmer und Lampe;
- Fig. 2: die zeitlichen Verläufe bestimmter Spannungen in dem in Fig. 1 gezeigten Blockschaltbild.

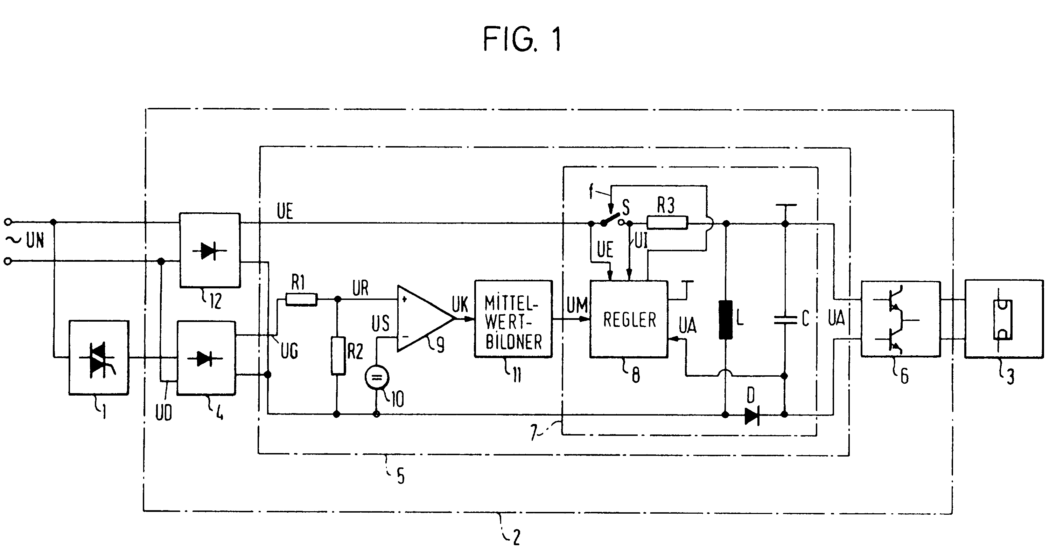

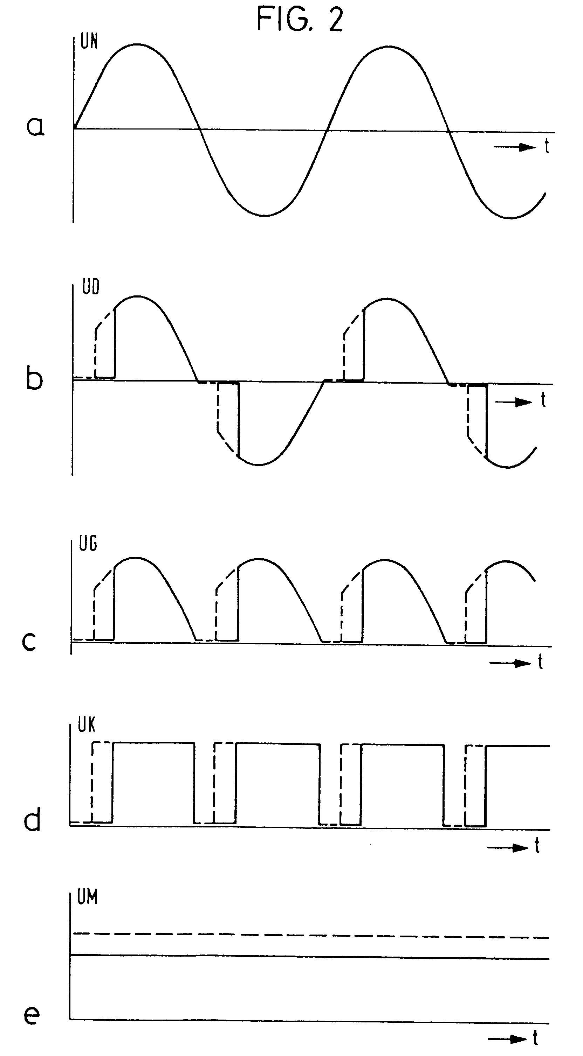

Fig. 1 zeigt ein elektronisches Vorschaltgerät 2, das zum Betreiben einer Gasentladungslampe 3 dient. Das Vorschaltgerät 2 ist über einen ersten Gleichrichter 12 an die Netz-Wechselspannung UN angeschlossen. Die Netz-Wechselspannung ist in Fig. 2a dargestellt. Paralell zu dem ersten Gleichrichter 12 ist ein zweiter Gleichrichter 4 über einen Dimmer 1 an die Netzwechselspannung angeschlossen.

Die Ausgangsspannung des Dimmers UD ist in Fig. 2b dargestellt. Diese Figur zeigt zwei Dimmungsgrade. Der weniger starke Dimmungs-Grad ist in gestrichelten Linien dargestellt, während der stärkere Dimmungsgrad in ausgezogenen Linien dargestellt ist.

Die Gleichrichter 4 und 12, sind vorzugsweise Brückengleichrichter . Die Ausgangsspannung UG des Brückengleichrichters 4 ist in Fig. 2c dargestellt. Auch hier sind die beiden Dimmungsgrade erkennbar.

An den ersten Gleichrichter 12 schließt sich ein elektronisches Oberwellenfilter 5 an. Dieses erzeugt eine Ausgangs-Gleichspannung UA, welche einem Wechselrichter 6 zugeführt wird. Der Wechselrichter erzeugt eine Wechselspannung höherer Frequenz, die im Bereich zwischen 20 und 50 kHz liegt. Diese höherfrequente Wechselspannung wird zum Betrieb der Gasentladungslampe 3 verwendet.

Das elektronische Oberwellenfilter 5 enthält einen üblichen sekundärgeschalteten invertierenden Sperrwandler 7, dem die gleichgerichtete ungeglättete Ausgangsspannung UE des Gleichrichters 12 zugeführt wird. Der Sperrwandler enthält in einem Zweig einen mit der Frequenz f getakteten Schalter S. Die Taktfrequenz f wird von einem Regler 8 bestimmt. Der Sperrwandler weist ferner eine Drossel L, einen Kondensator C und eine Diode D auf. Die Schaltung arbeitet in bekannter Weise so, daß bei geschlossenem Schalter S Strom durch die Drossel L fließt, die dann Energie aufnimmt. Wenn der Schalter S öffnet, fließt Strom von der Drossel L über die Diode D zum Kondensator C, so daß der Kondensator geladen bzw. nachgeladen wird. Die am Kondensator C abfallende Spannung ist gleich der Betriebsspannung UA des elektronischen Oberwellenfilters 5.

Dem Regler 8 wird eine erste Sollwert-Spannung UE zugeführt, die gleich der ungeglätteten Ausgangsspannung des ersten Gleichrichters 12 ist. Diese erste Sollwert-Spannung UE wird im Regler 8 mit einer ersten Istwert-Spannung UI verglichen, welche über einen Widerstand R3 abfällt und damit dem durch den Sperrwandler 7 fließenden Strom entspricht. Der Regler 8 sorgt - wie dies in den eingangs beschriebenen Literaturstellen dargelegt ist - in bekannter Weise dafür, daß die dem ersten Gleichrichter 12 entnommenen Stromimpulse eine Hüllkurve haben, welche den Sinushalbwellen-Impulsen der Netzspannung angenähert sind.

Ferner wird dem Regler 8 eine zweite Sollwert-Spannung UM zugeführt, die von einem Mittelwertbildner 11 erzeugt wird. Dazu wird dem Mittelwertbildner 11 die Ausgangsspannung UK eines Komparators 9 zugeführt, dessen einem Eingang eine von einem Spannungsteiler R1/R2 abgenommene Spannung UR zugeführt wird und dessen anderer Eingang mit einer Referenz-Gleichspannungsquelle 10 verbunden ist, die dem Komparator 9 die feste Gleichspannung US liefert. Die dem Spannungsteiler R1/R2 entnommene Spannung UR ist proportional zu der ungeglätteten Ausgangsspannung UG des zweiten Gleichrichters 4. Die Spannungen UK und UM sind in den Figuren 2d und 2e dargestellt. Aus Fig. 2e erkennt man, daß die Spannung UM in Abhängigkeit vom Dimmungsgrad mehr oder weniger hoch ist. Der Mittelwertbildner 11 kann von einem als Integrierglied wirkenden Tiefpaß, beispielsweise von einem RC-Glied gebildet sein.

Der Regler 8 vergleicht die zweite Sollwert-Spannung UM mit der Ausgangsspannung UA des Sperrwandlers 7 und erzeugt aus der Regeldifferenz ein Steuersignal für den Schalter S, dessen Frequenz f entsprechend variiert wird. Auf diese Weise wird gewährleistet, daß die Ausgangsspannung UA in Abhängigkeit von der zweiten Sollwert-Spannung UM folgegeregelt wird. Das bedeutet, daß durch Verändern des Dimmungsgrades am Dimmer 1 die Helligkeit der Lampe 3 variiert werden kann.

## Patentansprüche

1. Elektronisches Vorschaltgerät zum Versorgen einer Last (3), beispielsweise einer Lampe, insbesondere einer Gasentladungslampe (3), mit einer Wechselspannung, deren Frequenz höher als die Netzfrequenz ist, mit
- einem an das Wechselstromnetz anzuschließenden ersten Gleichrichter (12),
- einem diesem nachgeschalteten Wechselrichter (6), der die höherfrequente Wechselspannung für die Last (3) erzeugt, und
- einem zwischen dem ersten Gleichrichter (12) und dem Wechselrichter (6) angeordneten elektronischen Oberwellenfilter (5), dessen Ausgangsspannung geregelt ist,
**dadurch gekennzeichnet,**
daß der Sollwert zur Regelung der Ausgangsspannung des Oberwellenfilters (5) abhängig von Spannungsveränderungen der Ein- oder Ausgangsspannung (UD bzw. UG oder UK) eines ebenfalls an das Wechselstromnetz anzuschließenden zweiten Gleichrichters (4) ist.

2. Elektronisches Vorschaltgerät nach Anspruch 1,
**dadurch gekennzeichnet,**
daß das elektronische Oberwellenfilter (5) einen getakteten Schaltregler (7) enthält.

3. Elektronisches Vorschaltgerät nach Anspruch 2,
**dadurch gekennzeichnet,**
daß dem getakteten Schaltregler (7) ein erstes von der gleichgerichteten Netzspannung abhängiges Sollwert-Signal und ein von seiner Ausgangsform abhängiges erstes Istwert-Signal zugeführt werden, und daß die Amplituden der Ausgangsstrom-Impulse durch Vergleich dieser beiden Signale so geregelt werden, daß sie eine an die Sinushalbwellen der gleichgerichteten Netzspannung angepaßte Hüllkurve bilden.

4. Elektronisches Vorschaltgerät nach Anspruch 2 oder 3,
**dadurch gekennzeichnet,**
daß dem getakteten Schaltregler (7) ein von der Ein- oder Ausgangsspannung (UD, UG, UK) des zweiten Gleichrichters (4) abhängiges zweites Sollwert-Signal (UM) sowie ein von seiner Ausgangsspannung (UA) abhängiges zweites Istwert-Signal zugeführt werden und daß die Taktfrequenz (f) für den Schalter (S) des Schaltreglers in Abhängigkeit von der Regeldifferenz dieser beiden Signale verändert wird.

5. Elektronisches Vorschaltgerät nach Anspruch 4,
**dadurch gekennzeichnet,**
daß zur Erzeugung des Sollwertsignals (UM) die Ausgangsspannung des zweiten Gleichrichters (4) gegebenenfalls für einen Spannungsteiler (R1, R2) dem einen Eingang eines Komparators (9) zugeführt ist, daß dem anderen Eingang des Komparators (3) eine Schwellwertspannung (US) zugeführt ist, daß die Ausgangsspannung (UK) des Komparators einem Mittelwertbildner (11) zugeführt ist, und daß die Ausgangsspannung (UM) des Mittelwertbildners (11) als zweites Sollwertsignal verwendet ist.

6. Elektronisches Vorschaltgerät nach einem der vorhergehenden Ansprüche,
**dadurch gekennzeichnet,**
daß bei Verwendung einer Lampe (3) als Last dem zweiten Gleichrichter (4) ein Dimmer (1) vorgeschaltet ist, der die Kurvenform der Netzspannung verändert.

7. Elektronisches Vorschaltgerät nach Anspruch 6,
**dadurch gekennzeichnet,**
daß der Dimmer (1) eine Phasenanschnittschaltung oder eine Phasenabschnittschaltung enthält.

## Claims

1. Electronic ballast for supplying a load (3), for example a lamp, in particular a gas-discharge lamp (3), with an alternating voltage whose frequency is higher than the mains frequency, comprising
- a first rectifier (12) to be connected to the alternating-current mains,
- an inverter (6) which is connected downstream of the latter and which generates the higher-frequency alternating voltage for the load (3), and
- an electronic harmonic filter (5) which is disposed between the first rectifier (12) and the inverter (6) and whose output voltage is controlled,
characterized in that the control point for controlling the output voltage of the harmonic filter (5) is dependent on the voltage variations of the input voltage or output voltage (UD or UG, or alternatively UK) of a second rectifier (4) likewise to be connected to the alternating-current mains.

2. Electronic ballast according to Claim 1, characterized in that the electronic harmonic filter (5) contains a clocked switching controller (7).

3. Electronic ballast according to Claim 2, characterized in that there are fed to the clocked switching controller (7) a first control-point signal, which is dependent on the rectified mains voltage, and a first measured-value signal, which is dependent on its output shape, and in that the amplitudes of the output-current pulses are controlled by comparing these two signals in such a way that they form an envelope curve matched to the sinusoidal half-waves of the rectified mains voltage.

4. Electronic ballast according to Claim 2 or 3, characterized in that there are fed to the clocked switching controller (7) a second control-point signal (UM), which is dependent on the input voltage or output voltage (UD, UG, UK) of the second rectifier (4) and also a second measured-value signal, which is dependent on its output voltage (UA), and in that the clock frequency (f) for the switch (S) of the switching controller is varied as a function of the error signal of these two signals.

5. Electronic ballast according to Claim 4, characterized in that, to generate the control-point signal (UM), the output voltage of the second rectifier (4) for a voltage divider (R1, R2), if necessary, is fed to the one input of a comparator (9), that a threshold-value voltage (US) is fed to the other input of the comparator (3), in that the output voltage (UK) of the comparator is fed to an averager (11), and in that the output voltage (UM) of the averager (11) is used as a second control-point signal.

6. Electronic ballast according to one of the preceding claims, characterized in that, if a lamp (3) is used as load, there is connected upstream of the second rectifier (4) a dimmer (1) which varies the curve shape of the mains voltage.

7. Electronic ballast according to Claim 6, characterized in that the dimmer (1) contains an on-gating phase-control circuit or an off-gating phase-control circuit.

## Revendications

1. Ballast électronique pour alimenter une charge (3), par exemple une lampe, en particulier une lampe à décharge dans un gaz (3), à l'aide d'une tension alternative dont la fréquence est supérieure à la fréquence du réseau, comprenant :
- un premier redresseur (12) destiné à être raccordé au réseau de courant alternatif ;
- un onduleur (6) faisant suite à ce premier redresseur et produisant la tension alternative de fréquence plus élevée pour la charge (3) ; et
- un filtre électronique à harmoniques (5) disposé entre le premier redresseur (12) et l'onduleur (6), filtre dont la tension de sortie est régulée,
caractérisé par le fait
que la valeur de consigne pour la régulation de la tension de sortie du filtre à harmoniques (5) est fonction de variations de la tension d'entrée ou de sortie (UD, UG ou UK) d'un deuxième redresseur (4) destiné à être raccordé également au réseau de courant alternatif.

2. Ballast électronique suivant la revendication 1,
caractérisé par le fait
que le filtre électronique à harmoniques (5) contient un régulateur de commutation (7) cadencé.

3. Ballast électronique suivant la revendication 1,
caractérisé par le fait
que le régulateur de commutation (7) cadencé reçoit un premier signal de valeur de consigne qui est fonction de la tension de réseau redressée et un premier signal de valeur réelle qui est fonction de son courant de sortie et que les amplitudes des impulsions de courant de sortie sont régulées, par comparaison de ces deux signaux, de manière à former une courbe-enveloppe adaptée aux demi-ondes sinusoïdales de la tension de réseau redressée.

4. Ballast électronique suivant la revendication 2 ou 3,
caractérisé par le fait
que le régulateur de commutation (7) cadencé reçoit un deuxième signal de valeur de consigne (UM) qui est fonction de la tension d'entrée ou de sortie (UD, UG, UK) du deuxième redresseur (4), ainsi qu'un deuxième signal de valeur réelle qui est fonction de sa tension de sortie (UA) et que la cadence (f) pour le commutateur (S) du régulateur de commutation est modifiée en fonction de la différence de ces deux signaux.

5. Ballast électronique suivant la revendication 4,
caractérisé par le fait
que pour la production du signal de valeur de consigne (UM), la tension de sortie du deuxième redresseur (4) est appliquée, le cas échéant en passant par un diviseur de tension (R1, R2), à une entrée d'un comparateur (9), qu'à l'autre entrée du comparateur (9) est appliquée une tension de valeur de seuil (US), que la tension de sortie (UK) du comparateur est appliquée à un moyenneur (11) et que la tension de sortie (UM) du moyenneur (11) est utilisée comme deuxième- signal de valeur de consigne.

6. Ballast électronique suivant l'une des revendications précédentes,
caractérisé par le fait
qu'en cas d'utilisation d'une lampe (3) en tant que charge, le deuxième redresseur (4) est précédé d'un variateur (1) qui fait varier la forme de la courbe de la tension du réseau.

7. Ballast électronique suivant la revendication 6,
caractérisé par le fait
que le variateur (1) contient une commande d'amorçage ou une commande de désamorçage.
